## Europäisches Patentamt
## European Patent Office
## Office européen des brevets

(19)

(11) Publication number: **0 072 214**
**B1**

(12) # EUROPEAN PATENT SPECIFICATION

(45) Date of publication of patent specification: **15.10.86**

(51) Int. Cl.⁴: **C 09 K 17/00, C 05 G 3/04**

(21) Application number: **82304145.4**

(22) Date of filing: **05.08.82**

(54) Copolymeric compositions useful as plant growing media additives.

(30) Priority: **07.08.81 GB 8124256**

(43) Date of publication of application:
**16.02.83 Bulletin 83/07**

(45) Publication of the grant of the patent:
**15.10.86 Bulletin 86/42**

(84) Designated Contracting States:
**AT BE CH DE FR IT LI LU NL SE**

(56) References cited:
**EP-A-0 023 347**
**FR-A-1 567 390**
**US-A-2 856 380**
**US-A-3 857 991**

(73) Proprietor: **UNILEVER NV**
**Burgemeester s'Jacobplein 1 P.O. Box 760**
**NL-3000 DK Rotterdam (NL)**

(72) Inventor: **Bosley, John Anthony**
**10 Philip Way Higham Ferrers**
**Wellingborough Northamptonshire (GB)**
Inventor: **Dehnel, Roger Brian**
**3 Laurence Court Dean Street**
**Marlow Buckinghamshire (GB)**
Inventor: **Symien, Serge Alfred**
**79 Queen's Drive**
**Bedford (GB)**

(74) Representative: **Roscoe, Brian Corrie et al**
**UNILEVER PLC Patents Division P.O. Box 68**
**Unilever House**
**London EC4P 4BQ (GB)**

EP 0 072 214 B1

Courier Press, Leamington Spa, England.

# 0 072 214

**Description**

This invention relates to water-retentive polymeric compositions useful as plant growing media additives comprising a cross-linked copolymer of acrylamide and (meth)acrylic acid salt.

Various forms of hydrogels ("superabsorbents") have been tested as, or at least proposed for use as, growing media additives, often referred to as soil conditioners, hydromulches, and soil-water retainers. Such additives can be used to improve the properties, such as moisture retention, of conventional plant growing media, for example soil, peat, sand, loam, compost and sawdust. Alternatively, they can be used in conjunction with aqueous plant nutrient solutions to provide moisture retention and root support. An extensive review of the relevant literature is given by R. A. I. Azzam, in *Commun. Soil Science and Plant analysis,* 11(8), 767—834, (1980).

Another publication in this field is GB—A—1 591 415 (Union Carbide Corp.) disclosing many cross-linked polyelectrolyte polymers useful as soil amendments. Cross-linking was mainly effected by subjecting the material to ionizing radiation involving accelerator equipment. One of the products specifically disclosed is a cross-linked co-polymer of potassium acrylate and acrylamide (molar ratio 1:3) co-polymerized beneath a Van de Graf accelerator.

Furthermore there is EP—A—0 023 347 (Isaflex AG) disclosing a soil amendment obtained by co-polymerizing acrylamide with $N,N^1$-methylene-bis-acrylamide in a weight ratio of 95:5, which copolymer normally contains a few percent of acrylic salt groups due to some hydrolysis taking place.

It has however been difficult to achieve the preparation of a product which has an adequately high degree of moisture uptake without adversely affecting, soil properties such as aeration when the product is incorporated in soil to give it a higher water-holding capacity.

Moreover, we find that many of the available polymeric growing media additives are not sufficiently stable against chemical and/or bacterial degradation to provide long-term benefits in the practical situation, or contain too high a proportion of water-soluble material which leads to poor soil conditions. The majority of these "superabsorbent" gels were in fact developed for purposes unrelated to agriculture, and it is not surprising that they have proved to be of relatively limited value in practical field trials.

One such material that has been tested as a plant growing medium additive is described in UK patent application No. 2,054,706A (Isaflex AG). This material is available commercially under the trade name "Agrohyd", and is apparently a polyacrylamide cross-linked with N,N'-methylene-bisacrylamide. In our tests, this product was shown to be a substantial improvement over many previous gels, in terms of its resistance to degradation in the soil and its low solubility, but it did not seem capable of releasably absorbing moisture in quantities sufficient to render it cost-effective in a practical situation.

Also US—A—4.172.066 (Zweigele, assigned to Dow Chem. Co.) discloses a polymer useful as a thickening agent for aqueous dispersions and as an agent for reducing the permeability of porous structures. These microgels which can be made of an acrylamide/acrylate polymer are also said to be useful in the plugging of porous formations or structures, packer fluids, etc. In the dry state the gel particles have a uniform small particle size less than 20 micrometers, preferably less·than 4 micrometers and most preferably less than 1 micrometer. What is disclosed here is how to reduce porosity by plugging with extremely small polymer particles.

For plant-growing materials which are claimed in the instant invention, however, plenty of air-filled porosity (aeration) is required.

By the invention, we have been able to effect a substantial improvement in the moisture-absorbing properties of polyacrylamide gels without sacrificing their useful stability in soil, thereby tailoring this particular gel type more closely to the requirements of an agricultural/horticultural context.

By the invention we provide a polymeric composition useful as a plant growing media additive, comprising a copolymer of acrylamide and acrylic acid salt, in a molar ratio of at least 70:30 but not greater than 95:5 cross-linked such that less than 30% of the polymeric composition (expressed by weight of the composition when dry) is water-soluble and the polymeric composition has the ability to absorb releasably at least 15 times its own weight of water. Preferably the molar ratio of acrylamide to acrylic acid salt is at least 80:20. Preferably the molar ratio is not greater than 90:10. Substituted acrylic acid salts, e.g. methacrylates, can be used.

By the invention we also provide a growing medium for plants, comprising a polymeric composition as defined in the preceding paragraph together with an aqueous plant nutrient solution and/or a conventional plant growing medium such as peat, loam, compost and the like.

The gel products of the invention are capable of releasably absorbing at least 15, generally at least 20, and often at least 25, times their weight of water without significantly interfering with essential soil properties. Indeed, some gel products of the invention are capable of releasably absorbing 100 times, or more their weight of water. It will be appreciated that absorption figures for "pure" water may not be particularly significant, because the presence of minute traces of ionised solutes can markedly affect the water-absorbing properties of gel polymers. Hence it is to be expected that any gel product will actually absorb substantially less of an aqueous plant nutrient solution, and so in practice their true absorbency is lower. However, in general, the gel products of the invention are capable of releasably absorbing from 10 to 70 times their dry weight of typical aqueous plant nutrient solution. Even better water-absorbency and soil properties can often be achieved by products in which, as in a preferred embodiment, the gel composition

2

is foamed, e.g. with a foam content equivalent to a volume increase of up to 100% or more, e.g. up to about 300%.

The polymerisation and cross-linking conditions are chosen such as would (in the absence of cross-linking) yield substantially water soluble high molecular weight polymer, but includes enough cross-linking agent to reduce the amount of water-soluble polymer (which could lead to undesirable "glue" formation on hydration) to less than 30%, and ideally less than 20%, by weight of the copolymer when dry. In general, the level of cross-linking agent will not need to be greater than 2%, and usually not greater than 1%, by weight of the total monomers. Usually the cross-linking agent will be present in an amount of at least 0.01% by weight of the total monomers. Mixtures of two or more cross-linking agents can be used if desired, and examples of suitable agents are ethylene glycol dimethacrylate, polyethylene glycol dimethacrylate and polyethylene glycol diacrylate. Most preferred cross-linking agents are N,N'-methylene-bisacrylamide and 1,3,5-triacrylol-hexahydro-S-triazine, and for these materials an ideal level will generally lie in the range 0.02 to 0.2% by weight of the total monomers. The proportion of soluble material in the dry polymer can conveniently be regarded for present purposes as equal to the proportion by weight which becomes non-sedimenting and ultrafiltrable after agitation of particulate (uniformly ground through 1.5 mm screen) polymer in 1% NaCl solution at room temperature for $2\frac{1}{2}$ hours.

It is preferred that the residual monomer in the polymer gel be not more than 1%, more preferably below 0.1%, most preferably below 0.05%. The special need for low monomer levels is due to the risk of toxicity to plants and users, and the levels which are acceptable can be checked according to the nature of the monomer with this need in mind. This can be achieved for example either by ensuring complete enough polymerisation, and/or by heating the polymer to remove residual monomer, and/or by solvent-washing. For example, residual acrylamide monomer can be removed by heating in the range 90°C—150°C for a sufficient time.

Preferably under suitable polymerisation conditions a monomer solution is polymerised by conventional UV photoinitiation using any suitable initiator, such as a benzoin alkyl ether. The total monomer level will generally be at least about 20%, and preferably at least 25%, by weight of the solution. An upper limit will depend on the solubility of the monomers used and the viscosity of the solution, especially if a thin-film process is being performed, but generally speaking a total monomer solution concentration of up to about 55% by weight is very suitable, and an ideal concentration will generally lie in the range 30—50%. The initiator level can be varied over wide limits, e.g. 0.001 to 1% of the monomer, but for bezoin methyl ether, for example, about 0.1% of monomer weight is very suitable. Polymerisation conditions can be chosen to ensure autoacceleration by reaction heat to give short reaction times without causing excessive overheating.

Acrylic acid monomer units can conveniently be present as the potassium, sodium or ammonium salt or the salt of any other acceptable convenient counterion. When acrylic acid is used as a monomer it can be partly (e.g. 90%) neutralised by alkali (e.g. $K_2CO_3$) before the polymerisation reaction.

As mentioned above, according to a preferred feature of certain embodiments of the invention, the polymer gel is in the form of a foam. Foaming can be produced for example, by saturating the reactant mix with a dissolved gas, and ensuring that the polymerisation conditions are such that the exothermic polymerisation reaction causes a temperature rise sufficient to drive off the gas after the reaction mix has become viscous, but before gelling is complete. In this way a bubble-containing polymer gel product is formed. As an example, a $CO_2$-effervescing system can be provided by saturating the reactant mix with carbon dioxide, and/or using a carbonate to neutralise an acrylic acid monomer.

Foaming can be enhanced by the inclusion of a foaming agent (e.g. emulsifier, detergent) in the reactant mix prior to polymerisation, and this leads to particularly useful low-density cellular gel structures in the final product. A very wide selection of foaming agents can be used, the only significant restrictions being that the agent should not render the reactant solution opaque to UV light, should not have a harmful effect on plants if it were to be leached from the gel during use, relative cost (although the level of foaming agent employed would in any event by very low). Preferably the quantity of foaming agent added to the reactant mix should be just sufficient to give the desired degree of foaming during the polymerisation, but this quantity will clearly vary from one agent to another. Very generally, it can be said that the quantity needed will lie in the range 0.01 to 0.1 gm/litre of reactant solution. Examples of suitable foaming agent that we have found to be effective are soaps, such as sodium stearate, and emulsifiers, such as sodium stearoyl-2-lactylate. Examples of other commercially-available foaming agents are hydrolysed proteins, such as "Hyfoama DS" (Food Industries NV) and glycerol esters, such as "Emulsponge 2002" (PPF International).

Foamed products made in this way are especially advantageous as soil conditioners in that they possess a "two-stage" water-holding capacity, by virtue of water taken into cells formed by the effervescence and water physically absorbed in the microporous polymer gel structure itself. They also can show increased water uptake rate, because of their greater surface-to-volume ratio.

Particulate gel compositions according to embodiments of the invention can conveniently be made by crushing or grinding a dry polymer gel mass. The gel particles are preferably rather coarse, i.e. at least 0.5 mm, preferably 1 mm or more typical particle size. The gel particles are preferably free of significant amounts of water-soluble or swellable fines which could cause formation of a gluey product on further hydration or cause potential dust problems for users. For example, one desirable composition provided by the invention comprises no more than 3% by weight of gel particles finer than 0.5 mm, and substantially no gel particles smaller than 0.25 mm. If necessary, fines can be removed, for example, by sieving.

The particulate gel compositions so produced can be added to soil to improve its water-holding ability, or to give water-retentive layers, mulches and packaging for use in horticulture and agriculture. It will be appreciated that the gel composition itself will not provide any nutrients to sustain plants, and it must therefore be regarded primarily as a moisture-retentive and physically-supportive material. When used in combination with an aqueous nutrient solution (containing e.g. phosphates, nitrates, plant hormones and growth regulants) and/or one or more traditional plant growing media, such as peat, loam, compost or moss, the whole provides a very suitable material in which plants can germinate, root or grow. The gel compositions of the invention are particularly well suited for use in the potting or rooting of immature plants in a nursery prior to transfer to field or plantation conditions, and as such can be mixed in minor proportion with a rooting (root-holding) medium such as wood fibre, peat, forest bark, straw, loam, or particulate plastics material.

Alternatively, the gel product of the invention can be manufactured and used in shaped form, such as sheets to provide water-retentive layers in soil or linings for plant pots, seed trays and other receptacles. Hollow or recessed "cubes" or other three-dimensional shapes can be used, to provide ideal miniature environments in which seeds can be sown or in which seedlings can be grown or transplanted.

The proportion of gel product used can be varied according to the situation. When employed as a soil additive, levels of inclusion as low as 0.5—1% by weight of gel/volume of growing medium can lead to significant soil improvements. In this context generally only a few percent of the gel are required, and levels in excess of 4% by weight may not be considered economic. However, in a small-scale potting or rooting procedure the gel can be used simply in conjunction with an aqueous nutrient solution and the gel therefore represents 100% of the solids present, although in this context it will generally be sensible on cost grounds to mix the gel with one or more cheaper supportive fillers such as sawdust, straw or sand.

The invention is illustrated without limiting its scope, by the several features of the following Examples.

Example 1

Acrylic acid (48.7 g) containing benzoin methyl ether (0.24 g) was completely neutralised with potassium carbonate (47.3 g) as a solution in water (120 mls). To this mixture acrylamide (192 g) and methylenebisacrylamide (0.24 g), as a solution in water (240 mls), was added. The solution was shielded from light as much as possible and was purged with nitrogen for 10 minutes.

The reactant mix was poured into pyrex glass dishes so as to give a film thickness of approximately 7.5 mm and irradiated with long wave length ultra-violet light ($2 \times 40$ watt tubes peaking at 365 nm giving an incident light intensity of 4000 uW/cm$^2$). The solution rapidly gelled to a give a non-foamed rubbery polymer accompanied by a rapid temperature rise, typically from 20°C to 100°C in $1\frac{1}{2}$ minutes. The total irradiation time was typically 5—10 minutes.

The rubbery polymer film was removed from the glass dishes and dried and crushed to give a particulate product. Fines were removed by sieving to reduce the likelihood of "glue" formation during use. The product was capable of absorbing 43 times its dry weight of a conventional phosphate-containing plant nutrient solution. The dry product contained just under 20% by weight of water-soluble material.

Example 2

To a solution of acrylamide (1800 g) in water (1950 mls) was added potassium carbonate (195.5 g) in water (500 mls). To this mixture, acrylic acid (204 g) containing benzoin methyl ether (2 g) and methylenebisacrylamide (1 g) was slowly added with stirring to complete the neutralisation reaction. The solution was shielded from light as much as possible and purged with nitrogen to flush out carbon dioxide from the carbonate neutralisation.

The reactant mix was then pumped to give a film thickness of 5—9 mm on a moving conveyor, which was shaped by the action of folding cheeks and a suction box to give a trough shape configuration which contained the liquid reactants. The conveyor then carried the solution through a nitrogen-filled cavity where it was irradiated with long wavelength UV light ($2 \times 40$ watt tubes peaking at 365 nm, giving $3500 \pm 200$ uW/cm$^2$ incident light intensity). Polymerisation was rapid and accompanied by a rapid temperature rise, reaching in excess of 100°C after 2—3 minutes. Some large bubbles were formed in the polymer film due to the boiling point of water being exceeded but the final material was not foamed. The total irradiation time was in excess of 20 minutes.

The rubbery polymer film was dried and crushed. The dry product could absorb 31 times its own weight of a conventional phosphate-containing plant nutrient solution. The dry product contained 9% by weight of water-soluble material.

Example 3

The procedure of Example 2 was repeated, using identical materials, quantities and reaction conditions, except that a dispersion of "Emulsponge 2002" (a commercially-available foaming agent obtained from PPF International) was added to the reactant mix and the nitrogen purging was omitted. The dispersion contained 1 g of foaming agent in 50 ml water.

4

During the polymerisation reaction there was a sudden and large increase in the volume of the polymer, due both to the boiling of the aqueous mixture and to the release of carbon dioxide from solution. The formation of a foamed gel was greatly enhanced by the addition of the foaming agent.

The foamed polymer film was dried and crushed. The dry material was capable of absorbing 39 times its own weight of a conventional aqueous phosphate-containing plant nutrient solution, and had a water-soluble material content of 11% by weight.

All of the dry particulate polymers of Examples 1 to 3 were free-flowing light-coloured materials. When blended with soil, damp compost, and other conventional plant growing media, and hydrated, they provided very good moisture retention and remained stable in a natural environment for many weeks. They showed little tendency to "glue" the soil particles together, due to their low content of water-soluble material.

Example 4
Stability of acrylamide/acrylic acid salt backbones

To study the inherent stability of hydrated polymer backbones, their molecular weight as a function of time in solution was examined for a range of water-soluble acrylamide/sodium acrylate copolymers. The weight average molecular weights (mw) were determined by low angle laser light scattering using 0.2M aqueous sodium chloride as solvent. The samples required dialysis against this solvent for at least seven days before the characterisation.

The molecular weights as a function of time are shown in Table 1. The figures in brackets give relative molecular weights.

TABLE 1
Weight average molecular weights $(\times 10^{-6})$

| | Copolymer molar ratio, poly(acrylamide:sodium acrylate) | | | | | |
|---|---|---|---|---|---|---|
| Age (days) | 90:10 | 85:15 | 70:30 | 60:40 | 50:50 | 40:60 |
| 7 | — | 6.5 (1.0) | — | — | — | — |
| 9 | — | — | 10.9 (1.0) | 8.2 (1.0) | 4.4 (1.0) | 2.6 (1.0) |
| 14 | 8.0 (1.0) | 6.6 (1.02) | — | — | — | — |
| 21 | — | — | 8.2 (0.75) | 3.5 (0.43) | 2.0 (0.45) | 0.95 (0.37) |
| 28 | — | 6.9 (1.06) | — | — | — | — |
| 29 | 8.6 (1.08) | — | — | — | — | — |
| 30 | — | — | 6.6 (0.61) | 2.3 (0.28) | 0.98 (0.22) | 0.51 (0.20) |
| 41 | — | — | 6.1 (0.56) | 1.9 (0.23) | 0.76 (0.17) | 0.44 (0.17) |
| 42 | 8.3 (1.04) | 6.3 (0.97) | — | — | — | — |
| 83 | 7.8 (0.98) | — | — | — | — | — |

It can be seen that polymers containing 40 mol% or more of sodium acrylate have poor stability in solution as shown by a rapid decrease in molecular weight with time. Copolymers containing 30 mol% or less of sodium acrylate show greatly increased stability.

Example 5
A range of polymer gels containing different molar ratios of acrylamide:potassium acrylate were prepared as follows and assessed for their relative abilities to absorb plant nutrient solution and for their relative solubilities.

Each gel was prepared by dissolving 10 mgs N,N'-methylene-bisacrylamide and a quantity of acrylamide in water, adding an aqueous solution of potassium carbonate, and then adding the whole mixture to a solution of 10 mgs benzoin methyl ether in acrylic acid. The reactant mix was shielded from the light, and purged with nitrogen for 10 minutes. Polymerisation was effected as in Example 1.

5

**0 072 214**

Each polymerised product was dried overnight at 90°C, milled to pass a 1.5 mm screen.

The actual quantities and proportions of the materials used are set out in Table 2 below, together with the relevant properties of "retention" (i.e. gm of a conventional aqueous phosphate-containing plant nutrient solution absorbed per gm of the dry polymer material) and "initial solubility" (i.e. percentage by weight of the dry polymer material soluble in water as assessed using the test procedure hereinbefore described).

The results show that retention improves with increasing proportion of acrylic acid salt in the polymer backbone, but at the expense of a greater % of soluble, potentially gluey, material in the dry polymer. These findings should be read in conjunction with the stability data given in Table 1 of Example 4.

Example 6

This Example shows in Table 3 below the properties of two commercially-available "superabsorbent" polyacrylate materials, recommended for use in agriculture/horticulture, compared with a material in accordance with the invention, prepared as per Example 2 above.

The commercially-available materials are:

"Viterra 2" (ex Nepera Chemical Co.), which we believe to be a very lightly cross-linked polyacrylamide/potassium acrylate copolymer, having an acrylamide:acrylate molar ratio of about 70:30.

"Agrohyd G12H" (ex Isaflex AG), which we believe to be a very heavily cross-linked polyacrylamide containing a low proportion (probably not more than 5 molar %) of acrylate groups due to hydrolysis of the acrylamide.

TABLE 2

| Acrylamide: $K^+$ acrylate | gm acrylamide + mls water | | gm $K_2CO_3$ + mls water | | gm acrylic acid | Retention | Initial solubility |
|---|---|---|---|---|---|---|---|
| 50:50 | 5 | 8 | 4.93 | 7 | 5.08 | 103 | 24.0 |
| 60:40 | 6 | 8 | 3.94 | 7 | 4.06 | 97 | 19.5 |
| 70:30 | 7 | 9 | 2.96 | 6 | 3.05 | 84 | 15.5 |
| 80:20 | 8 | 10 | 1.97 | 5 | 2.03 | 71 | 12.4 |
| 90:10 | 9 | 10 | 0.99 | 5 | 1.02 | 45 | 7.9 |
| 100:0 | 10 | 15 | — | — | — | 6.9 | 3.5 |

TABLE 3

| | "Viterra 2" | Product of Example 2 | "Agrohyd G12H" |
|---|---|---|---|
| Distilled water absorbency (gm/gm dry product) | 240 | 50 | 13 |
| Nutrient solution absorbency (gm/gm dry product) | 150 | 31 | 9 |
| Soluble fraction (% by weight) | 50 | 9 | 1 |

All three materials possess good stability against degradation in natural soil.

However, "Viterra 2" has a very high content of water-soluble material which leads to poor soil properties, especially aeration, although it possesses an outstanding ability to absorb moisture. We believe this deficiency is due to inadequate cross-linking.

On the other hand, "Agrohyd G12H" shows a very low level of undesirable water-soluble material, probably due to the heavy cross-linking, but its ability to absorb moisture is also low.

The product of the invention provides an effective balance of properties between the two extremes exemplified by these commercially-available products.

**Claims**

1. A particulate polymeric material useful as a plant-growing media additive, comprising a copolymer of acrylamide and (meth)acrylic acid salt characterized in that the molar ratio of these monomers is at least

6

70:30, but not greater than 95:5, which are cross-linked such that less than 30% of the polymeric material (expressed by weight of this material when dry) is water-soluble and that the polymeric material has the ability to absorb releasably at least 15 times its own weight of water, in which the particulate material is substantially free from particles smaller than 0.25 mm.

2. A particulate material according to claim 1, in which no more than 3% by weight of gel particles finer than 0.5 mm are present.

3. A particulate material according to claim 1 or 2, in which the average particle size is at least 0.5 mm.

4. A particulate material according to claim 1, wherein less than 20% of the polymeric composition (expressed by weight of the composition when dry) is water-soluble and which is capable of releasably absorbing at least 20 times its weight of water.

5. A growing medium for plants, comprising a particulate polymeric material as claimed in any one of the preceding claims.

6. A process for the preparation of a copolymer composition useful as a plant growing medium additive involving copolymerizing a mixture containing acrylamide and (meth)acrylic acid salt characterized in that the molar ratio of acrylamide to (meth)acrylic salt is between 70:30 and 95:5 and that a cross-linking agent is present and reacted in an amount sufficient to ensure that less than 30% of the resulting copolymer composition (expressed by weight of the copolymer when dry) is water soluble and that the copolymer has the capacity to absorb releasably at least 15 times its own weight of water.

7. A process according to claim 6, characterized in that the molar ratio of acrylamide to (meth)acrylic acid salt is between 80:20 and 90:10.

8. A process according to any one of claims 6 to 7, characterized in that less than 20% of the resulting copolymer (expressed by weight of the copolymer when dry) is water soluble.

9. A process according to any of the preceding claims characterized in that the copolymerization is carried out in the presence of 0.001 to 1% of a photo initiator based on the weight of monomer.

10. A process according to any one of claims 6 to 9, characterized in the cross-linking agent is N,N'-methylene-bisacrylamide and/or 1,3,5,-triacrylolhexahydro-S-triazine which is present in the reactant mix in an amount between 0.01 and 2% by weight of the total monomers.

11. A process according to any one of claims 6 to 10, characterized in the quantity of cross-linking agent present in the reactant mix is from 0.02 to 0.2% by weight of the total monomers.

12. A process according to any one of claims 6 to 11, characterized in that the copolymer is produced in foam form by causing a gas to be driven from the reaction mix after it has become viscous but before gelling is complete.

13. A process according to claim 12, characterized in that the gas is carbon dioxide.

14. A process according to claim 12 or 13, characterized in that foaming is enhanced by the presence of a foaming agent.

**Patentansprüche**

1. Teilchenförmiges polymeres Material zur Verwendung als Zusatz für Pflanzenwachstumsmittel, das ein Copolymer aus Acrylamid und einem (Meth-)Acrylsäuresalz enthält, dadurch gekennzeichnet, daß das Molverhältnis dieser Monomeren mindestens 70:30, jedoch nicht mehr als 95:5 beträgt, wobei diese so vernetzt sind, daß weniger als 30% des polymeren Materials (ausgedrückt durch das Gewicht dieses Materials, wenn es trocken ist) wasserlöslich sind, und daß das polymere Material die Fähigkeit hat, mindestens die 15fache Menge seines eigenen Gewichtes an Wasser freisetzbar zu absorbieren, wobei das teilchenförmige Material im wesentlichen frei von Teilchen kleiner als 0,25 mm ist.

2. Teilchenförmiges Material nach Anspruch 1, wobei nicht mehr als 3 Gew.-% Gelteilchen vorliegen, die feinkörniger als 0,5 mm sind.

3. Teilchenförmiges Material nach Anspruch 1 oder 2, wobei die durchschnittliche Teilchengröße mindestens 0,5 mm beträgt.

4. Teilchenförmiges Material nach Anspruch 1, wobei weniger als 20% der polymeren Zusammensetzung (ausgedrückt durch das Gewicht der Zusammensetzung, wenn sie trocknen ist) wasserlöslich sind und wobei es imstande ist, mindestens die 20fache Menge seines Gewichtes an Wasser freisetzbar zu absorbieren.

5. Wachstumsmittel für Pflanzen mit einem Gehalt eines in irgendeinem der vorhergehenden Ansprüche beanspruchten teilchenförmigen polymeren Materials.

6. Verfahren zur Herstellung einer Copolymerzusammensetzung zur Verwendung als Zusatz für Pflanzenwachstumsmittel unter Copolymerisieren einer ein Acrylamid und ein (Meth-)Acrylsäuresalz enthaltenden Mischung, dadurch gekennzeichnet, daß das Molverhältnis von Acrylamid zu dem (Meth-)Acrylsäuresalz zwischen 70:30 und 95:5 liegt und daß ein Vernetzungsmittel vorliegt und in einer ausreichenden Menge umgesetzt wird, um sicherzustellen, daß weniger als 30% der erhaltenen Copolymerzusammensetzung (ausgedrückt durch das Gewicht des Copolymers, wenn es trocken ist) wasserlöslich sind und daß das Copolymer die Fähigkeit hat, mindestens die 15fache Menge seines eigenen Gewichts an Wasser freisetzbar zu absorbieren.

7. Verfahren nach Anspruch 6, dadurch gekennzeichnet, daß das Molverhältnis von Acrylamid zu dem (Meth-)Acrylsäuresalz zwischen 80:20 und 90:10 liegt.

**0 072 214**

8. Verfahren nach irgendeinem der Ansprüche 6 oder 7, dadurch gekennzeichnet, daß weniger als 20% des erhaltenen Copolymers (ausgedrückt durch das Gewicht des Copolymers, wenn es trocken ist) wasserlöslich sind.

9. Verfahren nach irgendeinem der vorhergehenden Ansprüche, dadurch gekennzeichnet, daß die Copolymerisation in Gegenwart von 0,001 bis 1% eines Fotoinitiators, bezogen auf das Gewicht des Monomers, durchgeführt wird.

10. Verfahren nach irgendeinem der Ansprüche 6 bis 9, dadurch gekennzeichnet, daß das Vernetzungsmittel N,N'-Methylen-bis-acrylamid und/oder 1,3,5-Triacrylol-hexahydro-S-triazin ist, das in der Mischung der Reaktionspartner in einer Menge von 0,01 bis 2 Gew.-% der gesamten Monomermenge vorliegt.

11. Verfahren nach irgendeinem der Ansprüche 6 bis 10, dadurch gekennzeichnet, daß die Menge des in der Mischung der Reaktionspartner vorliegenden Vernetzungsmittels 0,02 bis 0,2 Gew.-% der gesamten Monomerenmenge beträgt.

12. Verfahren nach irgendeinem der Ansprüche 6 bis 11, dadurch gekennzeichnet, daß das Copolymer in Schaumform hergestellt wird, indem man ein Gas aus der Reaktionsmischung austreiben läßt, nachdem sie viskos geworden ist, jedoch bevor das Gelieren abgeschlossen ist.

13. Verfahren nach Anspruch 12, dadurch gekennzeichnet, daß das Gas Kohlendioxid ist.

14. Verfahren nach Anspruch 12 oder 13, dadurch gekennzeichnet, daß das Schäumen durch die Gegenwart eines Treibmittels gesteigert wird.

**Revendications**

1. Matière polymère particulaire utile en tant qu'additif aux milieux de croissance des plantes, comprenant un copolymère d'acrylamide et de sel d'acide (méth)acrylique, caractérisée en ce que le rapport molaire de ces monomères est d'au moins 70:30 mais ne dépasse pas 95:5, monomères qui sont réticulés de manière que moins de 30% de la matière polymère (exprimée par son poids sec) soit soluble dans l'eau et en ce que la matière polymère présente un pouvoir absorbant libérable d'au moins 15 fois son propre poids d'eau, ladite matière particulaire étant sensible-exempte de particules inférieures à 0,25 mm.

2. Matière particulaire selon la revendication 1, dans laquelle pas plus de 3% en poids de particules de gel inférieures à 0,5 mm sont présentes.

3. Matière particulaire selon la revendication 1 ou 2, dans laquelle la granulométrie moyenne est d'au moins 0,5 mm.

4. Matière particulaire selon la revendication 1, dans laquelle moins de 20% de la composition polymère (exprimée en poids de la composition à sec) est hydrosoluble et dont le pouvoir absorbant libérable est d'au moins 20 fois son poids d'eau.

5. Milieu de croissance pour plantes, comprenant une matière polymère particulaire telle que définie dans l'une quelconque des revendications précédentes.

6. Procédé de préparation d'une composition copolymère servant d'additif aux milieux de croissance des plantes, qui consiste à copolymériser un mélange contenant un acrylamide et un sel d'acide (méth)acrylique, caractérisé en ce que le rapport molaire de l'acrylamide au sel d'acide (méth)acrylique est de 70:30 à 95:5, et en ce qu'un agent de réticulation est incorporé et est mis en réaction en une quantité suffisante pour assurer que moins de 30% de la composition polymère résultante (exprimée en poids du copolymère sec) est hydrosoluble et que le pouvoir absorbant libérable du copolymère est d'au moins 15 fois son propre poids d'eau.

7. Procédé selon la revendication 6, caractérisé en ce que le rapport molaire acrylamide/sel d'acide (méth)acrylique est de 80:20 à 90:10.

8. Procédé selon la revendication 6 ou 7, caractérisé en ce que moins de 20% du copolymère résultant (exprimé en poids de copolymère sec) est hydrosoluble.

9. Procédé selon l'une quelconque des revendications précédentes, caractérisé en ce qu'on effectue la copolymérisation en présence de 0,001 à 1% d'un photoactivant par rapport au poids du monomère.

10. Procédé selon l'une quelconque des revendications 6 à 9, caractérisé en ce que l'agent de réticulation est le N,N'-méthylène-bis-acrylamide et/ou la 1,3,5-triacrylolhexahydro-S-triazine et est présent dans le mélange des réactifs en une quantité de 0,01 à 2% par rapport au poids total des monomères.

11. Procédé selon l'une quelconque des revendications 6 à 10, caractérisé en ce que la quantité de l'agent de réticulation dans le mélange des réactifs est de 0,02 à 2% par rapport au poids total des monomères.

12. Procédé selon l'une quelconque des revendications 6 à 11, caractérisé en ce qu'on prépare le copolymère sous forme d'une mousse en chassant un gaz du mélange de réaction après qu'il est visqueux mais avant la gélification complète.

13. Procédé selon la revendication 12, caractérisé en ce que le gaz est l'anhydride carbonique.

14. Procédé selon la revendication 12 ou 13, caractérisé en ce que le moussage est rehaussé par l'incorporation d'un agent moussant.